(19) Europäisches Patentamt
European Patent Office
Office européen des brevets

(11) **EP 2 291 031 B1**

(12) **EUROPEAN PATENT SPECIFICATION**

(45) Date of publication and mention
of the grant of the patent:
**07.11.2012 Bulletin 2012/45**

(51) Int Cl.:
*H04W 40/12* *(2009.01)*    *H04L 12/56* *(2006.01)*
*H04W 28/24* *(2009.01)*    *H04W 28/26* *(2009.01)*
*H04W 76/02* *(2009.01)*

(21) Application number: **09290638.7**

(22) Date of filing: **24.08.2009**

(54) **Flow management in wireless MESH networks**

Datenstrommanagement in drahtlosen MESH-Netzen

Gestion du flux dans des réseaux maillés sans fil

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.03.2011 Bulletin 2011/09**

(73) Proprietor: **Alcatel Lucent
75007 Paris (FR)**

(72) Inventors:
• **Banniza, Thomas-Rolf
71701 Schwieberdingen (DE)**

• **Gloss, Bernd
70569 Stuttgart (DE)**

(74) Representative: **Wetzel, Emmanuelle
Alcatel Lucent
Intellectual Property & Standards
70430 Stuttgart (DE)**

(56) References cited:
**WO-A-2008/097221**

**Description**

Field of the Invention

The invention relates to the field of telecommunications, more specifically to wireless mesh networks, and in particular to flow management of mesh flows in wireless mesh networks.

Background

This section introduces aspects that may be helpful in facilitating a better understanding of the invention. Accordingly, the statements of this section are to be read in this light and are not to be understood as admissions about what is in the prior art or what is not in the prior art.

In the following, a mesh network with a packet-based flow-oriented traffic handling is assumed. Quality-of-Service (QoS) management for this kind of mesh network requires a per-link QoS support and a mesh-wide network capacity management to create paths of links (mesh flows) and installations of service level agreements. Mesh flows can be user connections or, more likely, aggregates of user traffic between access nodes and gateways used for multi-hop backhauling. Mesh flows may also be internal signaling traffic (with agreed QoS parameters) between the network nodes, e.g. between an access node and a gateway of the wireless mesh network.

A mesh flow is the concatenation of multiple one-hop QoS allocations forming a path through the mesh network, each one-hop QoS allocation being defined on a mesh link connecting two nodes of the wireless mesh network. The overall packet transmission performance of a mesh flow results from the available bitrate at each hop and the sum of all packet delays at each single hop as major parameters (taking statistical multiplexing effects on single hops into account).

Service level agreements for a packet flow on a specific hop (mesh link) of the mesh network are implemented as one-hop QoS allocations which are typically associated with a bit rate, e.g., a guaranteed minimum bitrate, to be established on the mesh link, and on further QoS parameters of the service level agreement. Usually, all one-hop QoS allocations for one mesh flow have identical (minimum) bit rate.

The mesh network may also comprise a plurality of link groups, a link group being defined as a plurality of links between nodes that can share the same physical resource, i.e., spectrum, time, code, etc. Typically, mesh links belonging to different link groups do not share the same physical resources. Resource sharing in disjoint link groups is realized by standard MAC technologies, e.g., such as IEEE 802.11 or IEEE 802.16. Each of the link groups may be associated with a link group resource manager for performing one-hop QoS allocations on the mesh links of the group.

The per-hop QoS support / allocation may comprise a Soft-QoS resource reservation system for link groups, packet queuing units at each link and MAC systems accessing the physical resource at each end of the link. Packet queuing units realize packet queuing disciplines, e.g., a weighted fair queuing among flows or for traffic classes. For the QoS management, the link group resource manager may have control access to packet queuing engines and MAC entities of all links inside a link group. Usually, the link group resource manager is local to the link group and the ultimate authority for soft QoS allocations at single hops.

In contrast thereto, for managing flows with a multi-hop scope, network capacity manager(s) may be provided. They are in charge of doing admission control for new mesh flows, placement of new mesh flows in the existing mesh network and mesh network optimization by re-ordering mesh flows. For this, flow placement algorithms and mesh optimization algorithms may be applied requiring calculating the feasibility and further parameters of hypothetical mesh load situations.

For the inter-working between the decentralized link group resource managers and the network capacity manager(s), a link group resource model which is signaled between the link group resource managers and the network capacity manager(s) may be applied informing about available resources in the link groups. This link group resource model may allow the network capacity manger to pre-calculate hypothetical load situations and decide on new setups at a high probability that the subsequent QoS allocations at link groups will succeed.

Resource management systems in wire-based mesh networks, e.g., IntServ and RSVP, know about the resource sharing at links, e.g., for Ethernet links. In a simple case, the resource consumption for new situations may be calculated using a linear equation based on installed bitrates $r_i$ per link, as is demonstrated with Equation (1) below:

$$\sum_i r_i \leq R_{\max} - R_{guard} \quad (1)$$

The constraint for installing new flows is that the overall bit rate of existing flows is below a maximum overall

capacity $R_{max}$ minus some guard capacity $R_{guard}$ taking statistical multiplexing effects into account.

For a multi-hop resource management system, this simply requires the signaling of the overall capacity $R_{max}$ - $R_{guard}$ that can be assigned to flows in the link group between the link group QoS manager and the centralized network capacity management (signaling of system properties). The resource consumption of installed flows may either be signaled in addition to that (signaling of state information) or may be available at the central resource manager. In decentralized systems, the bit rates $r_i$ or the calculated current capacity in use have to be signalled.

Thus, in wire-based mesh networks, signaling bit-rate capacity from link group resource managers to the network capacity management and identifying links sharing the same physical resource is possible. A similar approach is included in IntServ for wire-based Internet. However, an approach assigning fixed transmission capacities to link groups and assuming a constant correspondence between bit-rates and physical resource consumption does not respect the wireless properties of different modulation and coding schemes with large deviations in the physical resource consumption, as do occur in wireless mesh networks. For example, when using 2BPSK with code rate ½ instead of 64QAM with code rate 5/6 as a modulation and coding scheme, a difference by a factor of 10 in raw bit-transmission performance is generated.

Thus, integrating wireless point-to-multipoint media into a multi-hop QoS management system working at packet level raises the issue to signal precise resource availabilities at link groups to resource capacity managers. The major challenge in this topic is that wireless transmission systems don't have a definite overall transmission capacity, since this value depends on environmental conditions in the radio domain.

WO 2008/097221 A1 discloses a method and system for establishing an end-to-end route for data to traverse a wireless network, including calculating a link cost function, calculating a quantized link cost function using the calculated link cost function, calculating a quantized cost of each of a plurality of end-to-end routes for data to traverse the wireless network, wherein the plurality of end-to-end routes include routes between a same set of nodes in the wireless network. The quantized cost of each of the plurality of end-to-end routes for data to traverse the wireless network is performed using the quantized link cost function and selecting one of the plurality of end-to-end routes, for data to traverse the wireless network, based on the quantized cost of each of the plurality of end-to-end routes.

Summary of the Invention

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for determining if a mesh flow forming a path through a wireless mesh network can be established on a link group of the wireless mesh network, the link group comprising mesh links sharing the same physical resources, the method comprising: calculating a physical resource consumption rate of the link group based on bitrates of one-hop QoS allocations for all mesh links of the link group and on production cost factors denoting the physical resource consumption rate for establishing a packet-based traffic flow of a given traffic type on a respective one of the mesh links, and comparing the calculated physical resource consumption to a maximum physical resource capacity of the link group for determining if the mesh flow can be established on the link group.

Thus, in the method described above, it is proposed to extend a standard link group resource model based on bitrates (as it is used for shared media systems in multi-hop QoS reservation systems such as RSVP/IntServ) by introducing a mapping to conclude from required bitrates of flows to the physical resource consumption. The link group resource calculations are then based on physical resources rather than on bit-rate resources.

The physical resource consumption of a packet transmission flow depends among others on the used modulation and coding scheme and on further overhead as MAC headers and repetition mechanisms (ARQ/HARQ/Handshaking). It is assumed that these properties can be mapped into a simple factor or into a few simple factors. For the reminder of this text, a single, flow (index i) and link (index j) dependent factor $a_{i,j}$ will be assumed for the sake of simplicity. This mapping factor $a_{i,j}$ will be referred to as "production cost factor". However, one skilled in the art will appreciate that an extension to the use of more than one factor, e.g., deriving additional overhead based on the mean packet size, is not excluded.

For performing the decision if a new mesh flow can be established on a link group, it is assumed that in the link group a certain amount of physical resources, expressed as a rate, are available, being denoted in the following as a physical resource capacity $R_{Phys,group,max}$. The physical resource capacity may be a bandwidth in Frequency Division Multiplex, FDM, systems or spectrum multiplied with time of usage in FDM+Time Division Multiplex, TDM, systems or any other combination of physical dimensions as they are used as basis for channel access systems. The physical resources / resource rate available for a specific link group is assumed to be invariant in time. This can be achieved, e.g., by orthogonal usage of physical resources (e.g. using OFDM) and spatial separation of link groups resulting in reduced interference among link groups below a certain threshold. In the model described herein, no physical resource sharing among link groups is applied. It will be understood that different link groups may be implemented using different types of hardware / different types of communication standards, such that the wireless mesh network does not have to be homogeneous.

The physical resource consumption $r_{phys,group}$ in a link group may be assumed to be the sum of the bit-rates $r_i$ of one-hop QoS allocations in a respective link group weighted with their production cost factors, i.e.

$$r_{phys,group} = \Sigma_{i,j}\, a_{i,j}\, r_i\,,$$

the sum being performed for all flows i established on links j of the link group, i.e. on all QoS allocations $X_{i,j}$ being accommodated in the link group.

By comparing the physical resource consumption (rate) $r_{phys,group}$ thus determined to the maximum resource capacity (rate) $R_{phys,group,max}$, a decision can be made as to whether a new mesh flow can be established on the link group. This calculation can be done for existing setups plus some new projected flows or for completely hypothetical mesh setups in order to derive whether a new setup is feasible or not.

The extended link group calculation model described above is not limited in its use for admission control systems which have to decide whether or not to accept new flows. Instead, the link group calculation model as described herein using one or more mapping factors, may also be useful in other mesh management applications, for example in mesh optimization systems allowing to perform a re-distribution of flows in a mesh network in order to achieve a better overall system performance, as will be described in greater detail further below.

In one variant of the method described above, for an initial setup of a one-hop QoS allocation, the production cost factor is predicted for at least one traffic type based on physical link properties of the respective mesh link, the physical link properties preferably being selected from the group consisting of: a modulation and coding scheme, a Signal-to-Interference and Noise Ratio, a repetition mechanism overhead, and a channel coding efficiency.

In an initial setup phase of the wireless mesh network, the decentralized link group resource managers inform the network capacity managers about available links in the link group, the physical capacity of the link group, and estimations of production cost factors for new one-hop QoS allocations for a set of traffic types (e.g. Voice, Video, Best Effort, etc.). The mesh setup may be obtained e.g. from a mesh self-configuration system or from an offline network setup as configured by an operations & maintenance team.

The estimations for the production costs are per link and per traffic type. They are calculated in the link group resource managers based on knowledge of properties of the used wireless transmission technology, measured link properties like length, radio conditions, noise figures, as well as on constraints related to the traffic type (VoIP, best effort, etc.) and result in the selection of a modulation and coding scheme for which the production cost factors can be derived.

In a further variant, for an installation of a one-hop QoS allocation, the production cost factor is calculated based on a calculation model taking flow setup information about QoS parameters of the one-hop QoS allocation into account, in particular a traffic type or an acceptable delay time, preferably in addition to physical link properties of the respective mesh link.

New installations of or changes on existing one-hop QoS allocations are signalled from the network capacity manager(s) to the link group resource managers. When instantiating new one-hop QoS allocations in a link group, the resulting used production cost factor is determined by the link group resource manager and is provided back to the network capacity manager where it will replace the estimated value used before. Together with this parameter, a link group resource manager may also provide the remaining free physical capacity of the link to the network capacity manager to ease further link calculations. The used production cost factor results from more detailed calculations taking exact QoS parameters of the one-hop QoS allocation into account.

In a further variant, the production cost factor is measured and/or monitored for at least one one-hop QoS allocation established on a mesh link, preferably by evaluating media access control, MAC, scheduling information available in the link group.

The estimated production costs for traffic types and links as well as the used production cost factors signalled when instantiating new one-hop QoS allocations are predictions, which are calculated based on known or measured physical link properties via the Signal-to-Interference and Noise Ratio (SINR) values, the used Modulation and Coding Scheme (MCS) under these conditions, models for Automatic Repeat Request (ARQ/HARQ) overhead under given radio conditions, and models for channel coding efficiencies under radio conditions. These calculations are necessary in order to provide production cost factors in planning phases and for the initial phase of a flow lifetime. For flows being already established on mesh links, a measurement system for evaluating real production cost factors from real measurements may be implemented, and the measurement results may be distributed by an update mechanism in case of significant variations, to be described in greater detail further below.

The measurement of the effective production cost factor per one-hop QoS allocation can be performed by the local link group manager. Additionally, improved production cost estimations for traffic types per link as signalled to the network capacity manager may be derived. In case of a radio system with a central Media Access Control, MAC, scheduling (e.g. WiMAX or existing cellular radio), the measurements will be done by analyzing the central MAC scheduler's behaviour. For this, the information of used physical resources for packet and frame transmissions available at the MAC scheduler is evaluated. This may require some extensions to existing MAC systems in base stations.

In case of a radio system with a de-centralized MAC scheduling (e.g. WiFi), the local link group manager may observe the effective utilization of the radio resource and may calculate the measurement results from the observed behaviour. This can be done in scenarios without hidden stations directly from a node within the link group, e.g., the link group resource manager, by evaluating the wireless channel conditions. Alternatively, the measurement of production cost factors can be done at the sending MAC units at the mesh links evaluating information of the MAC units for used modulation and coding schemes, air time, free air time, etc. Information gathered in the decentralized case will be reported to the link group resource manager to which the MAC units belong to. In this case, the link group resource managers may retrieve the information, e.g. via MAC communication from the decentralized MAC schedulers in the participating terminals, and may combine them.

In both system setups (centralized and de-centralized MAC scheduling), the captured measurement values may be filtered with e.g. an appropriate low pass filter before further processing. The resulting values may be provided as an input to the update system which will be described further below.

In a further variant, the method comprises: providing flow setup information for establishing a new mesh flow, in particular QoS parameters of one-hop QoS allocations, from at least one network capacity manager of the wireless mesh network to a plurality of link group resource managers, each link group resource manager being associated with a link group of the wireless mesh network on which the new mesh flow can be established, the method preferably further comprising: accepting or rejecting the QoS allocations of the network capacity manager in the link group resource managers.

As the link group resource manager is the ultimate authority for accepting or rejecting QoS allocations, differences in the calculations at the network capacity manager and the link group resource manager may lead to rejections of one-hop QoS allocations in the link group resource manager. Such a difference may result from differences in the state information used for the calculations at the different entities owing to transient changes and may require a further path allocation attempt in the network capacity manager.

In one improved variant, the method thus further comprises: providing updated state information about a link group, in particular about a change of the production cost factors, from the link group resource managers to the at least one network capacity manager.

In order to resolve the problem of different calculations in the local link group resource managers and the network capacity manager(s) due to e.g. changing radio conditions or other changes having influence on the distributed parameters such as the link group capacity, production cost factor estimations, or.the used production cost factors for installed one-hop QoS allocations, it is proposed to establish an updating system to inform the network capacity manager about these changes.

For this purpose, each link group resource manager may continuously monitor these parameters per link, in particular in the way described above, and will send updates to the network capacity manager(s) in case of significant changes (e.g. when exceeding a certain threshold since the last update) or at regular time intervals. The update of the production cost factors will be at least per link and traffic type but may comprise additionally also updates per instantiated one-hop QoS allocation.

An application of the extended link group calculation model is implemented in a method for performing optimized flow management, e.g., load balancing, in a wireless mesh network, comprising: determining, for a plurality of mesh flows, possible paths on the link groups of the wireless mesh network, and selecting those of the paths which optimize an overall optimization criterion for the distribution of the plurality of mesh flows on the link groups of the wireless mesh network, the optimization being based on a comparison of physical resource consumption rates to maximum physical resource capacities of the affected link groups, the physical resource consumption rate being calculated based on bitrates of one-hop QoS allocations for alt mesh links of a respective link group and on production cost factors denoting a physical resource consumption rate for establishing a packet-based traffic flow, preferably of a given traffic type, on a respective one of the mesh links.

As indicated above, the method described above reflects a further application of the extended link group calculation model, being this time applied to mesh optimization, i.e. for re-distribution of mesh flows in order to achieve an improved system performance. The overall optimization criterion may be, for example, an equal distribution of the overall load on the different link groups of the wireless mesh network, also referred to as load balancing. It will be understood, however, that more than one criterion may be taken into account for performing the optimization. For example, the number of hops required for establishing the plurality of flows on the respective paths may be taken into account.

A person of skill in the art will readily recognize that various steps of the above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of the above-described methods. The program storage devices may be, e.g., digital memories, magnetic storage media such as magnetic discs and magnetic tapes, hard drives, or optically readable digital data storage media. The embodiments are also intended to cover computers, in particular field programmable gate arrays (FPGA), application-specific integrated circuits (ASIC), or digital signal processors (DSP) programmed to perform the steps of the above-described method(s). Other hardware conventional and/or custom may also be included.

A further aspect of the invention relates to a link group resource manager for a link group of a wireless mesh network, the link group comprising mesh links sharing the same physical resources, the link group resource manager being adapted to provide information about production cost factors for one-hop QoS allocations for all mesh links of the mesh group to at least one network capacity manager, the production cost factors denoting a physical resource consumption rate for establishing a packet-based traffic flow of a given traffic type on the mesh links. The link group resource manager may be implemented as a physical entity which is distinct from the nodes of the link group. Typically, however, the link group resource manger will be established in one of the nodes belonging to the associated link group of the wireless mesh network. For the purpose of selecting a node of the link group as a link group resource manager, an election mechanism may be established.

For the sake of simplicity, in the above description, it has been assumed that there is only one centralized network capacity manager for a given mesh network. However, the invention is not limited to this: there may be e.g. several network capacity managers, each only managing part of the mesh network, or two or more network capacity managers may have concurrently access to the same link groups / link group managers. In the latter case, the state information has to be distributed to all affected network capacity managers. This can be done e.g. with a multicast approach or a publish/subscribe mechanism where a network capacity manager subscribes to the 'state information' of all relevant link group resource managers. In case of multiple network capacity managers the 'state information' also needs to comprise the effective free physical capacity of a mesh link.

In one embodiment, for an initial setup of a one-hop QoS allocation, the production cost factor is predicted for at least one traffic type based on physical link properties for establishing a traffic flow on the respective mesh link, the physical link properties preferably being selected from the group consisting of: a modulation and coding scheme, a Signal-to-Interference and Noise Ratio, a repetition mechanism overhead, and a channel coding efficiency. As described above, the estimation/prediction of the production cost factors may be done during the initial set-up of the wireless mesh network or during online network reconfiguration steps.

In a further embodiment, for a newly installed one-hop QoS allocation, a production cost factor is calculated and immediately signaled to the network capacity manager. The calculation of the production cost factor may be done based on the calculation model described above taking exact parameters of the one-hop QoS allocation into account. The immediate signaling is particularly advantageous when the one-hop QoS allocation specific production cost factor significantly deviates from the traffic-type based estimation and when two or more network capacity managers have access to the same resource group managers, as in this case, updates of the 'state information' need to be distributed whenever an element of the 'state information' changes. As several network capacity managers may signal concurrently new or changed one-hop QoS allocations to a link group resource manager, a network capacity manager may only take a signalled one-hop QoS allocation as instantiated after definite confirmation by the link group resource manager.

In a further embodiment, the link group resource manager is adapted for measuring and/or monitoring the production cost factor for at least one one-hop QoS allocation established on a mesh link, preferably by evaluating media access control, MAC, scheduling information which is available in the link group, the MAC scheduling information being retrieved by the link group resource manager in the way described above.

Yet another aspect of the invention relates to a network capacity manager for a wireless mesh network being adapted for calculating a physical resource consumption rate of at least one link group based on bitrates of one-hop QoS allocations for all mesh links of the link group, the link group comprising mesh links sharing the same physical resources, and on production cost factors denoting the physical resource consumption rate for establishing a packet-based traffic flow of a given traffic type on a respective one of the mesh links, the production cost factors being signalled to the network capacity manager by a link group resource manager of the link group, the network capacity manager being further adapted for comparing the calculated physical resource consumption rate to a maximum physical resource capacity of the link group, preferably for determining if a new mesh flow can be established on the link group.

Whether or not a new flow can be installed without harming the SLAs of existing flows can be decided based on comparing the outcome of a calculation of the resource consumption at a certain link group with the overall link group physical capacity $R_{phys,max}$, possibly minus a guard value. This calculation includes the one-hop QoS allocation needed for the new flow (i.e., a hypothetical scenario). The calculation can be done at each node in the network having the required information available, but is typically performed in the network capacity manager.

In one embodiment, the network capacity manager is adapted for providing flow setup information, in particular about one-hop QoS allocations, for establishing a new mesh flow to the link group managers of the link groups of the wireless mesh network on which the new mesh flow can be established. In this case, a path for establishing a new mesh flow in the wireless mesh network is determined by the network capacity manager and the link group resource managers of the affected link groups are provided with setup information for establishing the new mesh flow.

In a further embodiment, the network capacity manager is adapted for determining possible paths on the link groups of the wireless mesh network, and for selecting, for the plurality of mesh flows, those of the paths which optimize an overall optimization criterion for the distribution of the plurality of mesh flows on the link groups of the wireless mesh network, the criterion being e.g. a load balance of the wireless mesh network, the optimization being based on a comparison of the physical resource consumption rates to the maximum physical resource capacities of the affected link groups. In this case, the network capacity manager is used for performing a mesh optimization, possibly re-distributing flows in the mesh network in order to improve overall system performance.

A final aspect of the invention relates to a signaling system for a wireless mesh network, comprising: a plurality of link group resource managers as described above, each being associated with a respective link group of the wireless mesh network, and at least one network capacity manager as described above. The signalling system may be used to perform at least one of admission control, i.e. deciding on whether or not new flows may be accepted, and mesh optimization, i.e. re-distribution of flows in order to optimize overall system performance.

Further features and advantages are stated in the following description of exemplary embodiments, with reference to the figures of the drawing, which shows significant details, and are defined by the claims. The individual features can be implemented individually by themselves, or several of them can be implemented in any desired combination.

Brief Description of the Drawings

Exemplary embodiments are shown in the diagrammatic drawing and are explained in the description below. The following are shown:

**Fig. 1** shows a schematic diagram of a wireless mesh network having a centralized network capacity manager,

**Fig. 2** shows a schematic diagram of a link group of the wireless mesh network of Fig. 1,

**Fig. 3** shows a schematic diagram of a typical mesh flow in the wireless mesh network of Fig. 1, and

**Fig. 4** shows a schematic diagram of an embodiment of a signaling system according to the invention, being adapted to perform flow management for the wireless mesh network of Fig. 1.

Detailed Description of Preferred Embodiments

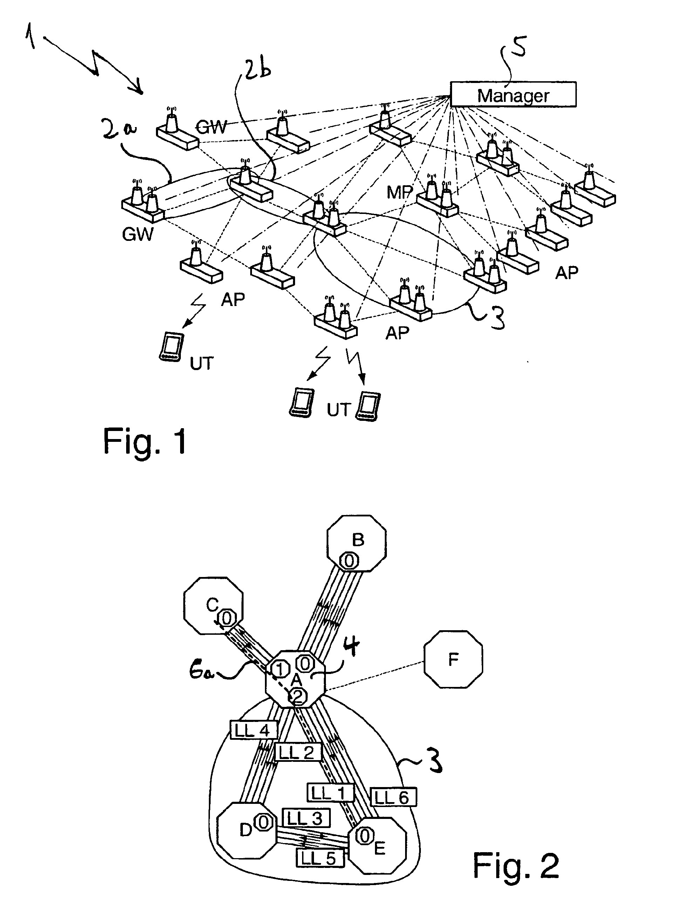

**Fig. 1** shows a wireless mesh network 1 having a plurality of nodes, each node belonging to one of three different types: A first type of nodes, being designated as gateway nodes **GW** in the following, is devised for providing a connection of the wireless mesh network 1 to a packet-based core network (e.g. the internet), the connection of the gateway nodes GW to the core network being implemented e.g. via a wire-line (cable or fiber-based) connection or via a wireless connection (not shown). A second type of nodes are devised as access points **AP** for providing connection to and exchanging information with a plurality of user terminals UT which may be connected to the wireless mesh network 1. The gateway nodes GW are linked to the access points AP via zero, one or more relay nodes, in the following being referred to as mesh points **MP.**

Neighboring nodes AP, MP, GW of the wireless mesh network 1 are connected via physical (wireless) links (one-hop links), being represented by dashed lines in Fig. 1, two of the one-hop links **2a, 2b** being highlighted in Fig. 1. The wireless mesh network 1 of Fig. 1 is assumed to be a heterogeneous mesh network, comprising two different types of links according to the IEEE 802.11 (WiFi) and the IEEE 802.16 (WiMAX) standards, respectively. It will be understood that some of the nodes (represented with two antennas in Fig. 1) may be adapted to perform communications according to both standards, whereas other nodes may perform communications according to only one of the standards.

Two or more links sharing the same standard may use the same physical resource, e.g. spectrum, time, code, etc. and may thus form a link group in the wireless mesh network 1, only one link group **3** being shown in Fig. 1 for the sake of simplicity, the link group 3 being represented in greater detail in **Fig. 2.** In the present example, the link group 3 comprises logical (i.e. directed) links **LL1** to **LL6** between a first, second and third node **A, D, E.** In Fig. 2, two further nodes C, B of the wireless mesh network 1 which do not pertain to the link group 3 are also represented, together with a further node **F** which is connected to the first node A via a physical link which does not form part of the wireless mesh network 1.

In the following table (Table 1), the logical links LL1 to LL6 of the link group 3 are represented together with the number of the wireless interface (0, 1, or 2) of each node A, D, E on which a respective logical mesh link is installed.

Table 1

| Logical Link ID | Source Node | IF | Destination Node | IF | Estimated Production Cost [Hz x s/ Bit/s] VoIP / BE | |
|---|---|---|---|---|---|---|
| 1 | A | 2 | E | 0 | 1.1 | 1.4 |
| 2 | A | 2 | D | 0 | 1.4 | 1.7 |
| 3 | D | 0 | E | 0 | 2.1 | 2.2 |
| 4 | D | 0 | A | 2 | 1.7 | 1.9 |
| 5 | E | 0 | D | 0 | 1.8 | 2.1 |
| 6 | E | 0 | A | 2 | 3.1 | 3.3 |

The link group 3 and further link groups are detected and configured in an initial self-configuration phase of the wireless mesh network 1, in which radio parameters, e.g., WLAN channels and OFDMA sub-channel areas, are set and mesh links to be used are configured. For each link group, a local link group manager **4** (in the present example, implemented in the first node A) is elected as the ultimate authority for soft-QoS reservations (one-hop QoS allocations) and for influencing local packet handling entities and MAC entities at mesh nodes. The whole mesh network 1 (i.e., the multi-hop view) is managed by a centralized network capacity manager **5** shown in Fig. 1, which is adapted to communicate with the nodes of the network 1 which are elected as link group resource managers.

The network capacity manager 5 is informed about all existing link groups 3, either by the mesh self-configuration function or by the link group resource managers 4 themselves. During the registration process, the link group resource managers 4 inform the network capacity manager 5 also about the overall physical resource capacity $R_{phys,group,max}$ and about estimates for production cost factors $a_{type,j}$ for each logical link (LL1 to LL6 in the present example) for a representative set of traffic types. The production cost factors $a_{type,j}$ represent the estimated physical resource consumption rate for establishing a packet-based traffic flow on a respective one of the logical links LL1 to LL6 and are dependent on the link j and on the traffic type (instead of the flow i), as there is no flow established on the link j when the estimation is performed. Apart from the physical link properties of the respective mesh link such as a modulation and coding scheme, a Signal-to-Interference and Noise Ratio, a repetition mechanism overhead, a channel coding efficiency, etc., the production cost factor $a_{type,j}$ is also dependent on a traffic type, resp. QoS class (Voice, Video, Best Effort, etc.) of the mesh flow to be established on a respective link LL1 to LL6, as can be easily seen from the following link group resource allocation table, also comprising information about a maximum delay time on a respective link LL1 to LL6:

Table 2

| QoSAlloc ID | Logical Link ID | (minimum) guaranteed Bitrate (Bit/s) | Max Delay (ms) | Type | Used Production Cost Factor (Hz x s/ Bit/s) M= Measured C= Calculated |
|---|---|---|---|---|---|
| 1 | 1 | 100000 | 50 | BE | 1.1 (M) |
| 2 | 1 | 100000 | 10 | Voice | 1.7 (C) |
| 3 | 2 | 200000 | 20 | Video | 1.3 (M) |
| 4 | 2 | 200000 | 50 | BE | 2.1 (M) |
| 5 | 3 | 115000 | 30 | BE | 1.1 (M) |
| 6 | 4 | 120000 | 10 | Voice | 2.1 (M) |
| 7 | 4 | 50000 | 5 | Voice | 2.2 (M) |
| 8 | 5 | 64000 | 50 | BE | 1.1(C) |

(continued)

| QoSAlloc ID | Logical Link ID | (minimum) guaranteed Bitrate (Bit/s) | Max Delay (ms) | Type | Used Production Cost Factor (Hz x s/ Bit/s) M= Measured C= Calculated |
|---|---|---|---|---|---|
| 9 | 5 | 72000 | 100 | BE | 1.7(C) |
| 10 | 6 | 180000 | 20 | Voice | 2.1 (C) |

The values shown in Table 2 are a snap-shot of the state information available in the link group resource manager 4, the state information being regularly updated, e.g. when new flows are instantiated. A - possibly not up-to-date - copy of the state information is available in the network capacity manager 5.

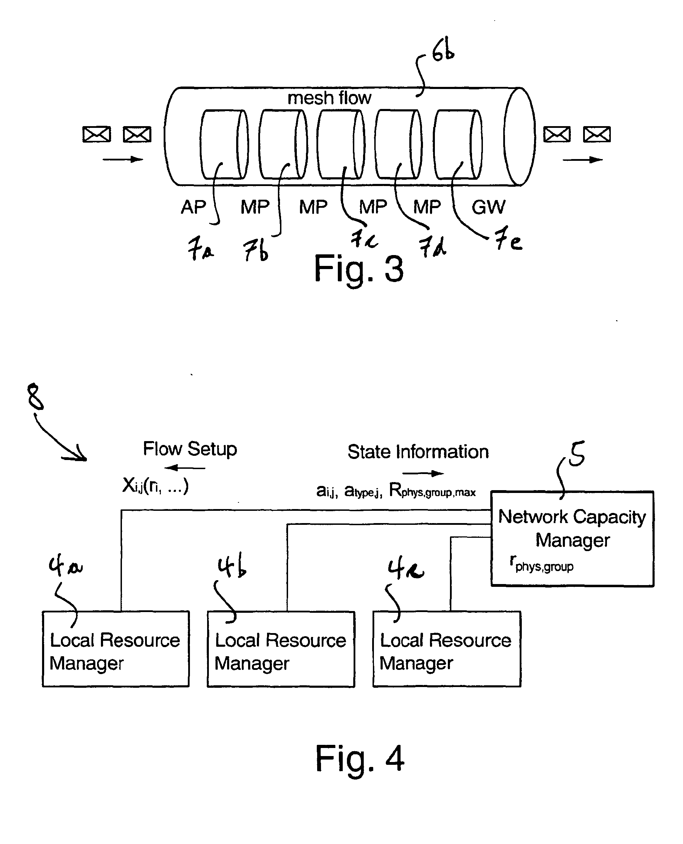

A mesh flow is the concatenation of multiple one-hop QoS allocations forming a path through the mesh network 1. One such mesh flow **6a** from node C to node E is indicated in Fig. 2. Typically, however, a mesh flow is established between an ingress (access point AP or GW) and an egress (gateway node GW or AP) of the wireless mesh network 1, the mesh flow being used for transporting aggregates of user flows over the wireless mesh network 1. An example of such a mesh flow **6b** is given in **Fig. 3,** the mesh flow 6b leading from an access point AP via three consecutive mesh points MP to a gateway node GW. For each link between two of the nodes, a one-hop QoS allocation **7a** to **7e** has to be established. The QoS allocations are defined as sets of QoS parameters which at least comprise a (minimum) bit rate $r_i$ for the mesh flow, being usually identical for all the QoS allocations 7a to 7e of the mesh flow 6b.

Whenever a request for installing a new mesh flow in the wireless mesh network 1 occurs, the network capacity manager 5 calculates possible paths through the mesh and evaluates these paths by pre-calculating whether the new flow can be placed there, possibly also applying a load balancing in the wireless mesh network 1.

For this purpose, as indicated in **Fig. 4,** state information, in particular the estimated production costs $a_{type,j}$ and the maximum physical resource capacity $R_{phys,group,max}$ of the affected link groups 3 have to be signalled from corresponding resource group managers **4a** to **4c** to the network capacity manager 5. The overall arrangement represented in Fig. 4 forms a signalling system **8** for the wireless mesh network 1.

The network capacity manager 5 uses the signalled production cost factors $a_{i,j}$ for determining a physical resource consumption rate $\mathbf{r}_{phys,group}$ of at least one of the link groups associated with a respective one of the resource group managers 4a to 4c, the calculation being based on bitrates $r_i$ of the one-hop QoS allocations to be established on the mesh links, for example of the resource group 3 of Fig. 2. The resource consumption rate $r_{phys,group}$ may be calculated from the bitrates $r_i$ using a link group model with a linear relation between bitrates $r_i$ and physical resource consumption, being e.g. of the form:

$$r_{phys,group} = \Sigma_{i,j}\ a_{i,j}\ r_i$$

for all (i,j) with $X_{i,j}$ being accommodated in the link group i.e. as a weighted sum of the bitrates $r_i$ with the production cost factors $a_{i,j}$ being used as weights. The production costs $a_{i,j}$ of new flows are based on the estimated traffic-type dependent production costs $a_{type,j}$ being available in the link group resource managers 4a to 4c based on tables using the traffic type (VoIP, data, Video, etc.) and the link distance as input parameters for a first estimation.

For determining if a new mesh flow can be established on a respective link group, the network capacity manager 5 compares the calculated physical resource consumption rate $r_{phys,group}$ to the maximum physical resource capacity $R_{phys,group,max}$ of the link group, as follows:

$$r_{phys,group} = \Sigma_{i,j}\ a_{i,j}\ r_i \leq R_{phys,group,\ max} - R_{phys,group,guard}\ .$$

If the above inequality holds, a new mesh flow can be established on the link group, if not, the physical resource consumption does not allow for establishing a new flow. In the above inequality, a guard rate $R_{phys,group,guard}$ is introduced for providing some guard capacity, e.g. for taking statistical multiplexing effects and small temporal fluctuations of the wireless channel into account. It will be understood, however, that the above calculation may also be performed without introducing a guard rate, or by modifying the guard rate.

When a new path for a mesh flow is found, the network capacity manager 5 provides flow setup information to the link group resource managers 4a to 4c of those link groups along which the new path has to be installed. The flow setup information comprises information about new one-hop QoS allocations $X_{i,j}$ being a set of QoS parameters such as a (minimum) bitrate $r_i$ to be established on the respective links j.

The local link group resource managers 4a to 4c also put this one-hop QoS allocation into their data base and - depending on the wireless technology - configure local packet handling entities and local MAC mechanisms accordingly, e.g., by installing technology-dependent connections on a respective link.

The acknowledgement of these reservation requests is provided from the link group resource managers 4a to 4c to the network capacity manager 5. It includes the success status of the reservation and - in case of a successful resource allocation - the One-hop QoS Allocation specific production cost factor $a_{i,j,calc}$ that will be used for the established flow.

The one-hop QoS allocation-specific production cost factors $a_{i,,j,calc}$ which are used by the resource group managers 4a to 4c for the installation of the one-hop QoS allocations is typically more precise than the estimated value provided during the initial setup, as in this case, the production cost factor $a_{i,j,calc}$ is calculated based on a calculation model taking - in addition to physical link properties of the respective mesh link - flow setup information about QoS parameters of the one-hop QoS allocation $X_{i,j}$, in particular a traffic type or an acceptable delay time, into account.

Moreover, an updating mechanism may be implemented for one-hop QoS allocations $X_{i,j}$ which have already been established on mesh links. In this case, the production cost factor $a_{i,j,measured}$ may be measured and/or monitored for at least one one-hop QoS allocation by evaluating media access control, MAC, scheduling information available in the link group. Such an evaluation is possible for both centralized and de-centralized MAC scheduling and will not be described in detail herein.

The updated state information about a link group, in particular about a change of the production cost factors $a_{i,j} = \{\, a_{i,j,calculated} \mid a_{i,j,measured}\}$ of installed One-hop QoS Allocations or $a_{type,j}$ for estimated production cost factors, may be provided from the link group resource managers 4a to 4c to the network capacity manager 5. However, it may be advantageous to send updates of the production costs $a_{i,j}$ or of other parameters from the link group resource managers 4a to 4c to the network capacity manager 5 only when the production costs $a_{i,j}$ change for a longer time, as short term changes of the production costs $a_{i,j}$ may be covered by spare capacities in the link groups. Additional information that may be signalled from the local link group resource managers 4a to 4c to the network capacity manager 5 may be pre-calculated spare capacity within the link groups based on more complex calculation models. Thus, the signaling system 8 shown in Fig. 4 is adapted for performing at least three different tasks, namely for providing initial setup together with link group properties, instantiation of one-Hop QoS allocations, and updates of state information. The signaling allows one to use the decentralized link group resource managers 4a to 4c to constitute the ultimate authorities for accepting/ rejecting one-hop QoS allocations. As outlined above, possibilities to install new one-hop QoS allocations at links of the link groups are pre-calculated at the network capacity manager 5 using the extended link group calculation model described above and the new one-hop QoS allocations are instantiated by performing the allocation process at the local link group resource managers 4a to 4c. Link group properties as well as state information of one-hop QoS allocations are exchanged between the link group resource managers and the network capacity manager.

The link group calculation model as described above may also be used to check the possibility of hypothetical new flow distributions in the mesh network 1 and to derive further fitness values for optimization algorithms and thus to achieve further mesh network optimizations, e.g, an equal traffic distribution in the mesh network 1 which may improve transmission properties. For this purpose, i.e. for performing an optimized load balancing, possible paths on the link groups of the wireless mesh network may be determined for a plurality of mesh flows and those of the paths which optimize a load balance of the wireless mesh network may be selected. The optimization / selection will typically be based on a comparison of the physical resource consumption rate $r_{phys,group}$ to a maximum physical resource capacity $R_{phys,group,max}$ of the affected link groups. In the optimization, the remaining physical capacity can be used as fitness function for genetic searches and simulated annealing. For placing mesh flows on links, estimated production costs $a_{type,j}$ as described above will have to be used by the network capacity manager 5.

Although in the example given above, it is assumed that there is only one centralized network capacity manager for a given mesh network, it will be understood that the invention is not restricted to using only one network capacity manager. Quite on the contrary, there may be provided several network capacity managers, each managing only part of the mesh network, or two or more network capacity managers may have concurrently access to the same link group managers. In the latter case, the state information must be distributed from the link group resource managers to all affected network capacity managers which may be done e.g. with a multicast approach or a publish/subscribe mechanism where a network capacity manager subscribes to the 'state information' of all relevant link group resource managers. In case of multiple network capacity managers, the 'state information' may comprise the effective free physical capacity of a link. An update of the state information needs to be distributed whenever an element of the state information changes. As in this case, several network capacity managers may signal concurrently new or changed one-hop QoS allocations to a link group resource manager, a network capacity manager may only take a signaled one-hop QoS allocation as instantiated after definite confirmation by the link group resource manager.

In summary, the various aspects of the invention allow to pre-calculate resource conditions in wireless mesh networks at network capacity managers without requiring iterative signaling with local link group resource managers. This ability can be used in multi-hop environments for admission control and traffic optimization tools.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

**Claims**

1. Method for determining if a mesh flow (6a, 6b) forming a path through a wireless mesh network (1) can be established on a link group (3) of the wireless mesh network (1), the link group (3) comprising mesh links (LL1 to LL6) sharing the same physical resources, the method comprising:

   calculating a physical resource consumption rate ($r_{phys,group}$) of the link group (3) based on bitrates ($r_i$) of one-hop QoS allocations ($X_{i,j}$) at mesh hops for all mesh links (LL1 to LL6) of the link group (3) and on production cost factors ($a_{i,j}$) denoting the physical resource consumption rate for establishing a packet-based traffic flow of a given traffic type on a respective one of the mesh links (LL1 to LL6), and
   comparing the calculated physical resource consumption rate ($r_{phys,group}$) to a maximum physical resource capacity ($R_{phys,group,max}$) of the link group (3) for determining if the mesh flow (6a, 6b) can be established on the link group (3).

2. Method according to claim 1, wherein, for an initial setup of a one-hop QoS allocation ($X_{i,j}$), the production cost factor ($a_{i,j}$) is predicted for at least one traffic type based on physical link properties of the respective mesh link (LL1 to LL6), the physical link properties preferably being selected from the group consisting of: a modulation and coding scheme, a Signal-to-Interference and Noise Ratio, a repetition mechanism overhead, and a channel coding efficiency.

3. Method according to claim 1, wherein, for an installation of a one-hop QoS allocation ($X_{i,j}$), the production cost factor ($a_{i,j}$) is calculated based on a calculation model taking into account flow setup information about QoS parameters of the one-hop QoS allocation ($X_{i,j}$), in particular a traffic type or an acceptable delay time, preferably in addition to physical link properties of the respective mesh link (LL1 to LL6).

4. Method according to claim 1, wherein the production cost factor ($a_{i,j}$) is measured and/or monitored for at least one one-hop QoS allocation ($X_{i,j}$) established on a mesh link (LL1 to LL6), preferably by evaluating media access control, MAC, scheduling information available in the link group (3).

5. Method according to claim 1, further comprising:

   providing flow setup information for establishing a new mesh flow (6a, 6b), in particular QoS parameters of one-hop QoS allocations ($X_{i,j}$), from at least one network capacity manager (5) of the wireless mesh network (1) to a plurality of link group resource managers (4a to 4c), each link group resource manager (4a to 4c) being associated with a link group of the wireless mesh network (1) on which the new mesh flow (6a, 6b) can be established, the method preferably further comprising:

      accepting or rejecting the QoS allocations ($X_{i,j}$) of the network capacity manager (5) in the link group resource managers (4a to 4c).

6. Method according to claim 5, further comprising:

   providing updated state information about a link group (3), in particular about a change of the production cost factors ($a_{i,j}$), from the link group resource managers (4a to 4c) to the at least one network capacity manager (5).

7. Link group resource manager (4, 4a to 4c) for a link group (3) of a wireless mesh network (1), the link group (3) comprising mesh links (LL1 to LL6) sharing the same physical resources, the link group resource manager (4, 4a to 4c) being adapted to provide information about production cost factors ($a_{i,j}$) for one-hop QoS allocations ($X_{i,j}$) for all mesh links (LL1 to LL6) of the mesh group (3) to at least one network capacity manager (5), the production cost factors ($a_{i,j}$) denoting a physical resource consumption rate for establishing a packet-based traffic flow of a given traffic type on the mesh links (LL1 to LL6).

**8.** Link group resource manager according to claim 7, wherein for an initial setup of a one-hop QoS allocation ($X_{i,j}$), the production cost factor ($a_{i,j}$) is predicted for at least one traffic type based on physical link properties for establishing a traffic flow on the respective mesh link (LL1 to LL6), the physical link properties preferably being selected from the group consisting of: a modulation and coding scheme, a Signal-to-interference and Noise Ratio, a repetition mechanism overhead, and a channel coding efficiency.

**9.** Link group resource manager according to claim 7, wherein for a newly installed one-hop QoS allocation ($X_{i,j}$), a production cost factor ($a_{i,j}$) is calculated and immediately signaled to the at least one network capacity manager (5).

**10.** Link group resource manager according to claim 7, being adapted for measuring and/or monitoring the production cost factor ($a_{i,j}$) for at least one one-hop QoS allocation ($X_{i,j}$) established on a mesh link (LL1 to LL6), preferably by evaluating media access control, MAC, scheduling information being available in the link group (3).

**11.** Network capacity manager (5) for a wireless mesh network (1) being adapted for calculating a physical resource consumption rate ($r_{phys,group}$) of at least one link group (3) based on bitrates ($r_i$) of one-hop QoS allocations ($X_{i,j}$) for all mesh links (LL1 to LL6) of the link group (3), the link group (3) comprising mesh links (LL1 to LL6) sharing the same physical resources, and on production cost factors ($a_{i,j}$) denoting the physical resource consumption rate for establishing a packet-based traffic flow of a given traffic type on a respective one of the mesh links (LL1 to LL6), the production cost factors ($a_{ij}$) being signalled to the network capacity manager (5) by a link group resource manager (4a to 4c) associated with the link group (3), the network capacity manager (5) being further adapted for comparing the calculated physical resource consumption rate ($r_{phy,group}$) to a maximum physical resource capacity ($R_{phys,group,max}$) of the link group (3) for determining if a new mesh flow (6a, 6b) can be established on the link group.

**12.** Network capacity manager according to claim 11, being adapted for providing flow setup information, in particular about one-hop QoS allocations ($X_{i,j}$), for establishing a new mesh flow (6a, 6b) to the link group managers (4a to 4c) of the link groups (3) of the wireless mesh network (1) on which the new mesh flow (6a, 6b) which forms a path through the wireless mesh network (1) can be established.

**13.** Network capacity manager according to claim 11, being adapted for determining, for a plurality of mesh flows (6a, 6b), possible paths on the link groups (3) of the wireless mesh network (1), and
for selecting those of the paths which optimize an overall optimization criterion for the distribution of the plurality of mesh flows (6a, 6b) on the link groups (3) of the wireless mesh network (1), the optimization being based on a comparison of the physical resource consumption rates ($r_{phys,group}$) to the maximum physical resource capacities ($R_{phys,group,max}$) of the affected link groups (3).

**14.** Signaling system (8) for a wireless mesh network (1), comprising:

> a plurality of link group resource managers (4a to 4c) according to claim 7, each being associated with a respective link group (3) of the wireless mesh network (1), and
> at least one network capacity manager (5) according to claim 11.

**Patentansprüche**

**1.** Verfahren zum Ermitteln, ob ein vermaschter Fluss (6a, 6b), welcher einen Pfad durch ein drahtloses Maschennetzwerk (1) bildet, auf einer Verbindungsgruppe (3) des drahtlosen Maschennetzwerks (1) hergestellt werden kann, wobei die Verbindungsgruppe (3) vermaschte Verbindungen (LL1 bis LL6) umfasst, welche dieselben physikalischen Ressourcen gemeinsam nutzen, wobei das Verfahren umfasst:

> Berechnen einer Verbrauchsrate von physikalischen Ressourcen ($r_{phy.group}$) der Verbindungsgruppe (3) auf der Basis von Bitraten ($r_i$) von One-Hop-QoS-Zuweisungen ($X_{i,j}$) an vermaschten Hops für alle vermaschten Verbindungen (LL1 bis LL6) der Verbindungsgruppe (3) und von Produktionskostenfaktoren ($a_{i,J}$), welche die Verbrauchsrate von physikalischen Ressourcen kennzeichnen, für die Herstellung eines paketbasierten Verkehrsflusses einer gegebenen Verkehrsart auf einer entsprechenden der vermaschten Verbindungen (LL1 bis LL6), und Vergleichen der berechneten Verbrauchsrate von physikalischen Ressourcen ($r_{phys.group}$) mit einer maximalen physikalischen Ressourcenkapazität ($R_{phys.group.max}$) der Verbindungsgruppe (3), um zu ermitteln, ob der vermaschte Fluss (6a, 6b) auf der Verbindungsgruppe (3) hergestellt werden kann.

**2.** Verfahren nach Anspruch 1, wobei, für eine anfängliche Installation einer One-Hop-QoS-Zuwelaung ($X_{i,j}$), der Produktionskostenfaktor ($a_{i,j}$) für mindestens eine Verkehrsart auf der Basis der physikalischen Verbindungseigenschaften der jeweiligen vermaschten Verbindung (LL1 bis LL6) vorhergesagt wird, wobei die physikalischen Verbindungseigenschaften vorzugsweise aus einer Gruppe bestehend aus: Einem Modulations- und Codierschema, einem Signal-zuinterferenz und Rausch-Verhältnis, einem Wiederholungsmechanismus-Overhead und einer Kanalcodierungseffizienz, gewählt werden.

**3.** Verfahren nach Anspruch 1, wobei, für eine Installation einer One-Hop-QoS-Zuweisung ($X_{i,j}$), der Produktionskostenfaktor ($a_{i,j}$) auf der Basis eines Berechnungsmodells unter Berücksichtigung von Flow-Setup-Informationen über QoS-Parameter der One-Hop-QoS-Zuweisung ($X_{i,j}$), Insbesondere einer Verkehrsart oder einer zulässigen Verzögerungszeit, vorzugsweise zusätzlich zu physikalischen Verbindungseigenschaften der jeweiligen vermaschten Verbindung (LL1 bis LL6), berechnet wird.

**4.** Verfahren nach Anspruch 1, wobei der Produktionskostenfaktor ($a_{i,j}$ für mindestens eine auf einer vermaschten Verbindung (LL1 bis LL6) eingerichteten One-Hop-QoS-Zuweisung ($X_{i,j}$) gemessen und/oder überwacht wird, vorzugsweise durch Auswerten von in der Verbindungsgruppe (3) verfügbaren Medienzugriffssteuerungs- bzw. MAC-Zeitplanungsinformationen.

**5.** Verfahren nach Anspruch 1, weiterhin umfassend:

Bereitstellen von Flow-Setup-Informationen für die Herstellung eines neuen vermaschten Flusses (6a, 6b), insbesondere von QoS-Parametern von One-Hop-QoS-Zuweisungen ($X_{i,j}$), durch mindestens einen Netzwerkkapazitätsverwalter (5) des drahtlosen Maschennetzwerks (1) an eine Vielzahl von Verbindungsgruppen-Ressourcenverwaltern (4a bis 4c), wobei jeder Verbindungsgruppen-Ressourcenverwalter (4a bis 4c) einer Verbindungsgruppe des drahtlosen Maschennetzwerks (1), auf welcher der neue vermaschte Fluss (6a, 6b) hergestellt werden kann, zugeordnet ist, wobei das Verfahren vorzugsweise weiterhin umfasst:

Akzeptieren oder Zurückweisen der QoS-Zuwelsungen ($X_{i,j}$) des Netzwerkkapazitätsverwalters (5) in den Verbindungsgruppen-Ressourcenverwaltern (4a bis 4c).

**6.** Verfahren nach Anspruch 5, weiterhin umfassend:

Bereitstellen von aktualisierten Zustandsinformationen über eine Verbindungsgruppe (3), insbesondere über eine Änderung der Produktionskostenfaktoren ($a_{i,j}$), durch die Verbindungsgruppen-Ressourcenverwalter (4a bis 4c) an den mindestens einen Netzwerkkapazitätsverwalter (5).

**7.** Verbindungsgruppen-Ressourcenverwalter (4, 4a bis 4c) für eine Verbindungsgruppe (3) eines drahtlosen Maschennetzwerks (1), wobei die Verbindungsgruppe (3) vermaschte Verbindungen (LL1 bis LL6) umfasst, welche dieselben physikalischen Ressourcen gemeinsam nutzen, wobei der Verbindungsgruppen-Ressourcenverwalter (4, 4a bis 4c) für das Bereitstellen von Informationen über Produktionskostenfaktoren ($a_{i,j}$) für One-Hop-QoS-Zuweisungen ($X_{i,j}$) für alle vermaschten Verbindungen (LL1 bis LL6) der vermaschten Gruppe (3) an mindestens einen Netzwerkkapazitätsverwalter (5) ausgelegt ist, wobei die Produktionskostenfaktoren ($a_{i,j}$) eine Verbrauchsrate von physikalischen Ressourcen für die Herstellung eines paketbasierten Verkehrsflusses einer gegebenen Verkehrsart auf den vermaschten Verbindungen (LL1 bis LL6) kennzeichnen,

**8.** Verbindungsgruppen-Ressourcenverwalter nach Anspruch 7, wobei, für eine anfängliche Installatlon einer One-Hop-QoS-Zuweisung ($X_{i,j}$), der Produktionskostenfaktor ($a_{i,j}$) für mindestens eine Verkehrsart auf der Basis der physikalischen Verbindungseigenschaften für die Herstellung eines Verkehrsflusses auf der jewelligen vermaschten Verbindung (LL1 bis LL6) vorhergesagt wird, wobei die physikalischen Verbindungseigenschaften vorzugsweise aus einer Gruppe bestehend aus: Einem Modulations- und Codierschema, einem Signal-zu-Interferenz und Rausch-Verhältnis, einem Wiederholungsmechanismus-Overhead und einer Kanalcodierungseffizienz, gewählt werden.

**9.** Verbindungsgruppen-Ressourcenverwalter nach Anspruch 7, wobei, für eine neu installierte One-Hop-QoS-Zuweisung ($X_{i,j}$), ein Produktionskostenfaktor ($a_{i,j}$) berechnet und unverzüglich an den mindestens einen Netzwerkkapazitätsverwalter (5) signalisiert wird.

**10.** Verbindungsgruppen-Ressourcenverwalter nach Anspruch 7, dazu ausgelegt, den Produktionskostenfaktor ($a_{i,j}$) für mindestens eine auf einer vermaschten Verbindung (LL1 bis LL6) eingerichtete One-Hop-QoS-Zuweisung ($X_{i,j}$) zu messen und/oder zu überwachen, vorzugsweise durch Auswerten von in der Verbindungsgruppe (3) verfügbaren Medienzugriffssteuerungs- bzw. MAC-Zeltplanungsinformationen.

11. Netzwerkkapazitätsverwalter (5) für ein drahtloses Maschennetzwerk (1), dazu ausgelegt, eine Verbrauchsrate von physikalischen Ressourcen ($r_{phys.group}$) mindestens einer Verbindungsgruppe (3) auf der Basis von Bitraten ($r_1$) von One-Hop-QoS-Zuweisungen ($X_{i,j}$) für alle vermaschten Verbindungen (LL1 bis LL6) der Verbindungsgruppe (3) zu berechnen, wobei die Verbindungsgruppe (3) vermaschte Verbindungen (LL1 bis LL6) umfasst, welche dieselben physikalischen Ressourcen gemeinsam nutzen, und von Produktionskostenfaktoren ($a_{i,j}$), welche die Verbrauchsrate von physikalischen Ressourcen für die Herstellung eines paketbasierten Verkehrsflusses einer gegebenen Verkehrsart auf einer entsprechenden der vermaschten Verbindungen (LL1 bis LL6) kennzeichnen, wobei die Produktionskostenfaktoren ($a_{i,j}$) durch einen der Verbindungsgruppe (3) zugeordneten Verbindungsgruppen-Ressourcenverwalter (4a bis 4c) an den Netzwerkkapazitätsverwalter (5) signalisiert werden, wobei der Netzwerkkapazitätsverwalter (5) weiterhin dazu ausgelegt ist, die berechnete Verbrauchsrate von physikalischen Ressourcen ($r_{phys.group}$) mit einer maximalen physikalischen Ressourcenkapazität ($R_{phys.group.max}$) der Verbindungsgruppe (3) zu vergleichen, um zu ermitteln, ob ein neuer vermaschter Fluss (6a, 6b) auf der Verbindungsgruppe hergestellt werden kann.

12. Netzwerkkapazitätsverwalter nach Anspruch 11, ausgelegt für das Bereitstellen von Flow-Setup-Informationen, insbesondere über One-Hop-QoS-Zuweisungen ($X_{i,j}$), zur Herstellung eines neuen vermaschten Flusses (6a, 6b) an die Verbindungsgruppenverwalter (4a bis 4c) der Verbindungsgruppen (3) des drahtlosen Maschennetzwerks (1), aufweichen der neue vermaschte Fluss (6a, 6b), welcher einen Pfad durch das drahtlose Maschennetzwerk (1) bildet, hergestellt werden kann.

13. Netzwerkkapazltätsverwalter nach Anspruch 11, ausgelegt für das Ermitteln, für eine Vielzahl von vermaschten Flüssen (6a, 6b), von möglichen Pfaden auf den Verbindungsgruppen (3) des drahtlosen Maschennetzwerks (1), und für das Auswählen derjenigen der Pfade, welche ein Gesamtoptimierungskriterium für die Verteilung der Vielzahl von vermaschten Flüssen (6a, 6b) auf den Verbindungsgruppen (3) des drahtlosen Maschennetzwerks (1) optimieren, wobei die Optimierung auf einem Vergleich der Verbrauchsrate von physikalischen Ressourcen ($r_{phys.group}$) mit den maximalen physikalischen Ressourcenkapazitäten ($R_{phys.group.max}$) der betroffenen Verbindungsgruppen (3) basiert.

14. Signalisierungssystem (8) für ein drahtloses Maschennetzwerk (1), umfassend:

Eine Vielzahl von Verbindungsgruppen-Ressourcenverwaltern (4a bis 4c) gemäß Anspruch 7, welche jeweils einer entsprechenden Verbindungsgruppe (3) des drahtlosen Maschennetzwerks (1) zugeordnet sind, und mindestens einen Netzwerkkapazitätsverwalter (5) gemäß Anspruch 11.

## Revendications

1. Procédé destiné à déterminer si un flux maillé (6a, 6b) formant un chemin à travers un réseau maillé sans fil (1) peut être établi sur un groupe de liaison (3) du réseau maillé sans fil (1), le groupe de liaison (3) comprenant des liaisons maillées (LL1 à à LL6) partageant les mêmes ressources physiques, le procédé comprenant les étapes suivantes :

calculer un taux de consommation de ressources physiques ($r_{phys.group}$) du groupe de liaison (3) sur la base de débits binaires ($r_i$) des attributions QoS à saut unique ($X_{i,j}$) au niveau de sauts maillés pour toutes les liaisons maillées (LL1 à LL6) du groupe de liaison (3) et sur la base de facteurs de coût de production ($a_{i,j}$) indiquant le taux de consommation de ressources physiques pour établir un flux de trafic de paquets d'un type de trafic donné sur une liaison respective des liaisons maillées (LL1 à à LL6), et comparer le taux de consommation de ressources physiques ($r_{phys.group}$) calculé à une capacité de ressources physiques maximum ($R_{phys.group.max}$) du groupe de liaison (3) pour déterminer si le flux maillé (6a, 6b) peut être établi sur le groupe de liaison (3).

2. Procédé selon la revendication 1, dans lequel, pour une configuration initiale d'une attribution QoS à saut unique ($X_{i,j}$), le facteur de coût de production ($a_{i,j}$) est prévu pour au moins un type de trafic sur la base des propriétés de liaison physique de la liaison maillée (LL1 à LL6) respective, les propriétés de liaison physique étant de préférence sélectionnées dans le groupe constitué : d'un schéma de modulation et de codage, d'un rapport signal sur interférence plus bruit, d'un surdébit de mécanisme de répétition et d'un rendement du codage de canal.

3. Procédé selon la revendication 1, dans lequel, pour une installation d'une attribution QoS à saut unique ($X_{i,j}$), le facteur de coût de production ($a_{i,j}$) est calculé sur la base d'un modèle de calcul tenant compte des informations de configuration de flux concernant les paramètres QoS de l'attribution QoS à saut unique ($X_{i,j}$), en particulier un type de trafic ou un retard acceptable, de préférence en plus des propriétés de liaison physique de la liaison maillée (LL1 à LL6) respective.

4. Procédé selon la revendication 1, dans lequel le facteur de coût de production ($a_{i,j}$) est mesuré et/ou surveillé pour au moins une attribution QoS à saut unique ($X_{i,j}$) établie sur une liaison maillée (LL1 à LL6), de préférence en évaluant des informations de planification de contrôle d'accès au support, MAC, disponibles dans le groupe de liaison (3).

5. Procédé selon la revendication 1, comprenant en outre l'étape suivante :

   fournir des informations de configuration de flux pour établir un nouveau flux maillé (6a, 6b), en particulier les paramètres QoS d'attributions QoS à saut unique ($X_{i,j}$), à partir d'au moins un gestionnaire de capacité de réseau (5) du réseau maillé sans fil (1) à une pluralité de gestionnaires de ressources de groupe de liaison (4a à 4c), chaque gestionnaire de ressources de groupe de liaison (4a à 4c) étant associé à un groupe de liaison du réseau maillé sans fil (1) sur lequel le nouveau flux maillé (6a, 6b) peut être établi, le procédé comprenant en outre de préférence l'étape suivante :

      accepter ou rejeter les attributions QoS ($X_{i,j}$) du gestionnaire de capacité de réseau (5) dans les gestionnaires de ressources de groupe de liaison (4a à 4c).

6. Procédé selon la revendication 5, comprenant en outre l'étape suivante :

   fournir des informations d'état mises à jour concernant un groupe de liaison (3), en particulier concernant un changement des facteurs de coût de production ($a_{i,j}$), à partir des gestionnaires de ressources de groupe de liaison (4a à 4c) à l'au moins un gestionnaire de capacité de réseau (5).

7. Gestionnaire de ressources de groupe de liaison (4, 4a à 4c) pour un groupe de liaison (3) d'un réseau maillé sans fil (1), le groupe de liaison (3) comprenant des liaisons maillées (LL1 à LL6) partageant les mêmes ressources physiques, le gestionnaire de ressources de groupe de liaison (4, 4a à 4c) étant adapté pour fournir des informations concernant les facteurs de coût de production ($a_{i,j}$) pour des attributions QoS à saut unique ($X_{i,j}$) pour toutes les liaisons maillées (LL1 à LL6) du groupe maillé (3) à au moins un gestionnaire de capacité de réseau (5), les facteurs de coût de production ($a_{i,j}$) indiquant un taux de consommation de ressources physiques pour établir un flux de trafic de paquets d'un type de trafic donné sur les liaisons maillées (LL1 à L6).

8. Gestionnaire de ressources de groupe de liaison selon la revendication 7, dans lequel pour une configuration initiale d'une attribution QoS à saut unique ($X_{i,j}$), le facteur de coût de production ($a_{i,j}$) est prévu pour au moins un type de trafic sur la base des propriétés de liaison physique pour établir un flux de trafic sur la liaison maillée (LL1 à LL6) respective, les propriétés de liaison physique étant de préférence sélectionnées dans le groupe constitué : d'un schéma de modulation et de codage, d'un rapport signal sur Interférence plus bruit, d'un surdébit de mécanisme de répétition et d'un rendement du codage de canal.

9. Gestionnaire de ressources de groupe de liaison selon la revendication 7, dans lequel pour une attribution QoS à saut unique ($X_{i,j}$) nouvellement Installée, un facteur de coût de production ($a_{i,j}$) est calculé et immédiatement signalé à l'au moins un gestionnaire de capacité de réseau (5).

10. Gestionnaire de ressources de groupe de liaison selon la revendication 7, étant adapté pour mesurer et/ou surveiller le facteur de coût de production ($a_{i,j}$) pour au moins une attribution QoS à saut unique ($X_{i,j}$) établie sur une liaison maillée (LL1 à LL6), de préférence en évaluant des informations de planification de contrôle d'accès au support, MAC, disponibles dans le groupe de liaison (3).

11. Gestionnaire de capacité de réseau (5) pour un réseau maillé sans fil (1) étant adapté pour calculer un taux de consommation de ressources physiques ($r_{phys, group}$) d'au moins un groupe de liaison (3) sur la base de débits binaires ($r_l$) d'attributions QoS à saut unique ($X_{i,j}$) pour toutes les liaisons maillées (LL1 à L6) du groupe de liaison

# EP 2 291 031 B1

(3), le groupe de liaison (3) comprenant des liaisons maillées (LL1 à LL6) partageant les mêmes ressources physiques, et sur la base de facteurs de coût de production ($a_{i,j}$) indiquant le taux de consommation de ressources physiques pour établir un flux de trafic de paquets d'un type de trafic donné sur une liaison respective des liaisons maillées (LL1 à LL6), les facteurs de coût de production ($a_{i,j}$) étant signalés au gestionnaire de capacité de réseau (5) par un gestionnaire de ressources de groupe de liaison (4a à 4c) associé au groupe de liaison (3), le gestionnaire de capacité de réseau (5) étant en outre adapté pour comparer le taux de consommation de ressources physiques ($r_{phys,\ group}$) calculé à une capacité de ressources physiques maximum ($R_{phys,group,max}$) du groupe de liaison (3) pour déterminer si un nouveau flux maillé (6a, 6b) peut être établi sur le groupe de liaison.

**12.** Gestionnaire de capacité de réseau selon la revendication 11, étant adapté pour fournir des informations de configuration de flux, en particulier concernant les attributions QoS à saut unique ($X_{i,j}$), pour établir un nouveau flux maillé (6a, 6b) aux gestionnaires de groupe de liaison (4a à 4c) des groupes de liaison (3) du réseau maillé sans fil (1) sur lequel le nouveau flux maillé (6a, 6b) qui forme un chemin à travers le réseau maillé sans fil (1) peut être établi.

**13.** Gestionnaire de capacité de réseau selon la revendication 11, étant adapté pour déterminer, pour une pluralité de flux maillés (6a, 6b), des chemins possibles sur les groupes de liaison (3) du réseau maillé sans fil (1), et pour sélectionner les chemins qui optimisent un critère d'optimisation global pour la distribution de la pluralité de flux maillés (6a, 6b) sur les groupes de liaison (3) du réseau maillé sans fil (1), l'optimisation étant basée sur une comparaison des taux de consommation de ressources physiques ($r_{phye,group}$) avec les capacités de ressources physiques maximum ($R_{phys,group,max}$) des groupes de liaison (3) affectés.

**14.** Système de signalisation (8) pour un réseau maillé sans fil (1), comprenant :

une pluralité de gestionnaires de ressources de groupe de liaison (4a à 4c) selon la revendication 7, chacun étant associé à un groupe de liaison (3) respectif du réseau maillé sans fil (1), et
au moins un gestionnaire de capacité de réseau (5) selon la revendication 11.

Fig. 1

Fig. 2

mesh flow

AP    MP    MP    MP    MP    GW

*7a*  *7b*       *7c*   *7d*   *7e*

## Fig. 3

*8*

Flow Setup          State Information          *5*

$X_{i,j}(r_i, ...)$          $a_{i,j}, a_{type,j}, R_{phys,group,max}$

| Network Capacity Manager |
| $r_{phys,group}$ |

*4a*              *4b*              *4c*

| Local Resource Manager | Local Resource Manager | Local Resource Manager |

## Fig. 4

**EP 2 291 031 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008097221 A1